Europäisches Patentamt

European Patent Office

Office européen des brevets

(19)

(11) Veröffentlichungsnummer : **0 055 211**
**B1**

(12) **EUROPÄISCHE PATENTSCHRIFT**

(45) Veröffentlichungstag der Patentschrift :
05.09.84

(51) Int. Cl.³ : **B 65 B 51/30**

(21) Anmeldenummer : 81810427.5

(22) Anmeldetag : 27.10.81

(54) Siegelbackenanordnung.

(30) Priorität : 24.12.80 CH 9597/80

(43) Veröffentlichungstag der Anmeldung :
30.06.82 Patentblatt 82/26

(45) Bekanntmachung des Hinweises auf die Patenterteilung : 05.09.84 Patentblatt 84/36

(84) Benannte Vertragsstaaten :
CH DE FR GB IT LI NL

(56) Entgegenhaltungen :
US-A- 4 102 111

(73) Patentinhaber : SIG Schweizerische Industrie-Gesellschaft
CH-8212 Neuhausen am Rheinfall (CH)

(72) Erfinder : Netzhammer, Peter
Schneckenweg 17
D-7895 Klettgau 1 (DE)

(74) Vertreter : Schmid, Rudolf et al
c/o ISLER & SCHMID Patentanwaltsbureau Walchestrasse 23
CH-8006 Zürich (CH)

## Beschreibung

Die vorliegende Erfindung betrifft eine Siegelbackenanordnung bei Schlauchbeutel-Verpackungsmaschinen gemäss dem Gattungsbegriff des Anspruchs 1.

Bei Schlauchbeutelverpackungen werden in gegenseitigem Abstand ankommende Gegenstände in Verpackungshüllen eingelegt und anschliessend werden die Hüllen durch Prägung verschlossen und versiegelt und die einzelnen Packungen voneinander abgetrennt. Die Siegelbackenanordnungen weisen einander gegenüberliegende Prägeköpfe auf, die am Maschinenrahmen rotierbar gelagert sind. Solche Prägeköpfe sind in der Verpackungstechnik gut bekannt.

Gemäss einer Ausführungsform, die in der US-A-2 546 721 beschrieben ist, liegen zwei Prägeköpfe auf einander gegenüber angeordneten rotierbaren Walzen. Jeder Prägekopf hat Erhebungen und Vertiefungen, derart, dass ein Waffelmuster gebildet ist, von dem die Begrenzungslinien die Erhebungen darstellen. Bei schweren Materialien, bei mit Längsnähten gebildeten Schlauchbeuteln oder bei Zwickelfaltungen hat sich gezeigt, dass ein derartiger Verschluss nur mit starker Verlangsamung der Maschine gasdicht herstellbar ist, und zwar muss die zeitliche Folge der Arbeitstakte auf die benötigte Wärmezufuhr abgestimmt werden.

Es ist eine Aufgabe der Erfindung, eine Anordnung zu schaffen, mit der sich gasdichte Nähte herstellen lassen und zwar unabhängig von der Anzahl der Lagen des Verpackungsmaterials oder von dessen Dicke und bei gleichbleibender, oder wenn möglich, erhöhter Durchlaufgeschwindigkeit.

Erfindungsgemäss wird dies durch die Merkmale des Anspruchs 1 erreicht.

Ein Ausführungsbeispiel der Erfindung wird nachfolgend beschrieben. In der Zeichnung zeigen:

Figur 1 eine perspektivische Darstellung von zwei hintereinander im Arbeitsweg einer Verpackungsmaschine angeordneten Siegelbackenpaaren,

Figur 2 eine Schnittansicht durch einen Teil des stromaufwärtigen Prägekopfes nach der Schnittlinie II-II in Fig. 1,

Figur 3 eine Schnittansicht wie in Fig. 2, jedoch des stromabwärtigen Prägekopfes mit Messer, nach der Schnittlinie III-III in Fig. 1,

Figur 4 in vergrössertem Massstab einen Schnitt durch kämmende Prägeköpfe senkrecht zu den Prägekanten, und

Figur 5 und Figur 6 perspektivische Darstellungen von Verpackungen mit zwei Arten von Siegelnähten.

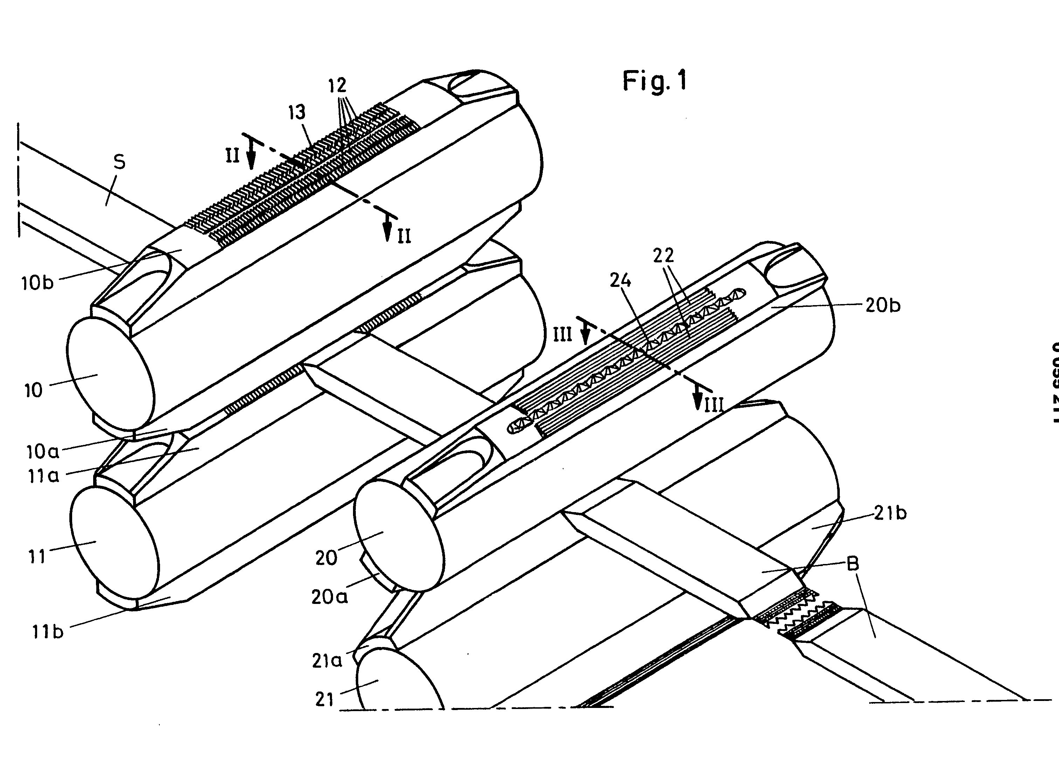

Die Verpackungsmaschinen sind in der Verpackungsindustrie gut bekannt. Aus diesem Grund wurde auf die detaillierte Darstellung einer solchen verzichtet. Sie könnte gleich ausgebildet sein wie diejenigen im eingangs erwähnten US-Patent 2 546 721, bis auf die Partie mit den Prägeköpfen, die dementsprechend in der vorliegenden Fig. 1 deutlich dargestellt ist. Auch wurden die Heizungen und deren Anschlüsse weggelassen, ebenso die Mittel zur Lagerung und zur Rotation der Prägeköpfe.

In Fig. 1 sind die stromaufwärtsgelegenen Prägekopfpaare 10a, 11a und 10b, 11b je auf einer Walze 10 bzw. 11 in bekannter Weise befestigt und die beiden Walzen drehen mit gleicher Drehgeschwindigkeit. Die Prägekanten 12 sind senkrecht zu den Achsen der Walzen 10, 11 angeordnet und sind durch Nuten 13 parallel zu den Achsen der Walzen unterteilt.

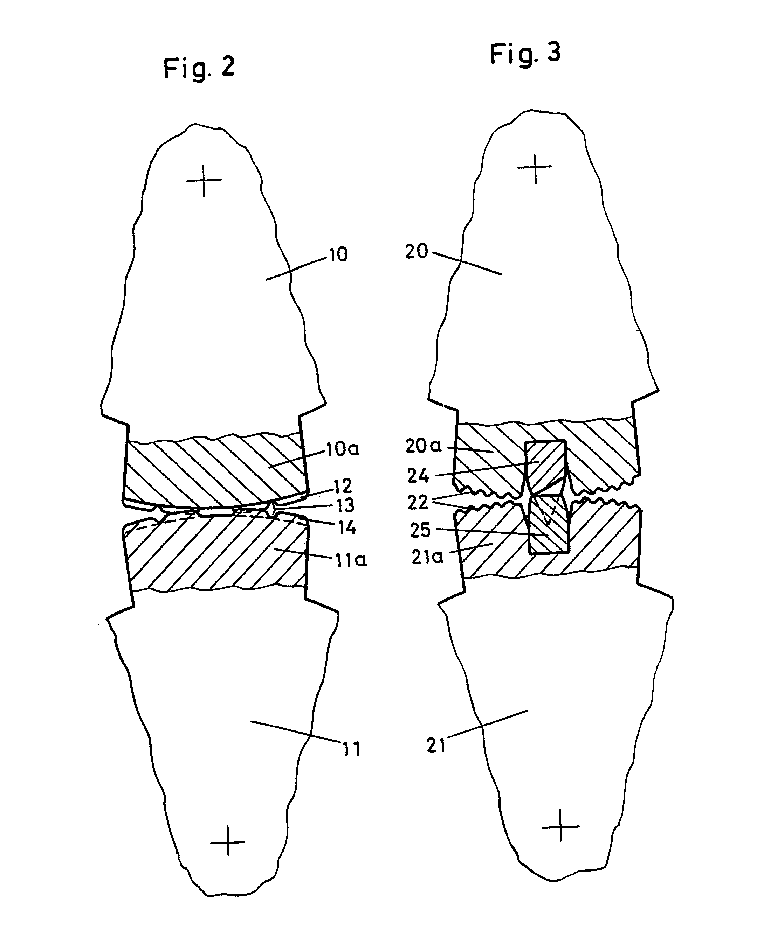

Stromabwärts ist ein weiteres Walzenpaar 20, 21 angeordnet, des ebenfalls Paare von zusammenwirkenden Prägeköpfen 20a, 21a und 20b, 21b trägt. Die Prägekanten 22 dieser Prägeköpfe sind parallel zu den Achsen der Walzen angeordnet und es sind noch Messerteile 24, 25 (Fig. 3) zum Abtrennen von verschlossenen Beuteln in der Mitte zwischen den Prägekanten angeordnet.

Ein Schlauch S ist stromaufwärts des ersten Walzenpaares angedeutet und abgetrennte Beutel B sind stromabwärts dargestellt.

Fig. 2 und 3 zeigen Ausschnitte aus senkrecht zu den Walzenachsen verlaufenden Schnittebenen. Die Walzen 10, 11 gemäss Fig. 2 tragen je einen Prägekopf, z. B. 10a, 11a. Wie aus der Zeichnung deutlich hervorgeht, kämmen die Prägekanten 12 des Prägekopfes 10a mit Prägekanten 14 des Prägekopfes 11a, so dass immer eine Erhebung des einen Prägekopfes auf Lücke des andern Prägekopfes steht. Ebenfalls deutlich sind die Nuten 13 zu erkennen.

Die Prägeköpfe 20a, 21a der Walzen 20 und 21 haben Prägekanten 22, die senkrecht zur Zeichnungsebene verlaufen. Auch hier kämmen die Erhebungen, indem eine Erhebung des einen Prägekopfes auf Lücke des andern Prägekopfes steht. Ein Messerpaar 24, 25 mit Spitzen und Ausnehmungen gemäss bekannter Ausführungsformen ist mittig in den Prägeköpfen angeordnet.

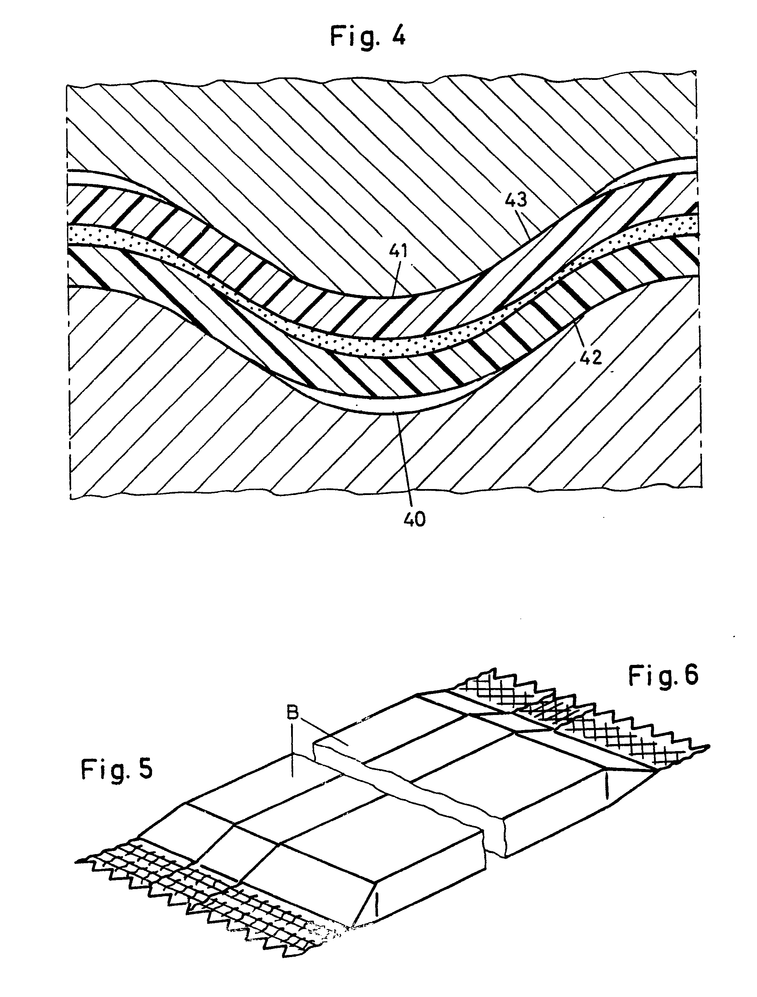

Wie Fig. 4 zeigt, ist der Abstand bei beiden Arten von Prägeköpfen zwischen den auf Lücke 40 stehenden Erhebungen 41 grösser als der senkrecht auf den Flanken 42, 43 gemessene Abstand. Damit kann erreicht werden, dass Siegelmaterial, entweder ein Klebstoff oder thermoplastisches Kunstharz, aus der Partie zwischen den Flanken in die Partien zwischen Erhebungen und Lücken gepresst wird. Denselben Zweck erfüllen auch die achsparallelen Nuten 13 in den Prägeköpfen 10a, b und 11a, b, denn auch in diesen Bereichen kann sich überschüssiger Klebstoff ansammeln, der dann bei der zweiten Prägung mit den Prägeköpfen 20a, 20b und 21a, 21b sich wieder verteilt, so dass schliesslich eine gasdichte Siegelung erhalten wird.

Gemäss Fig. 5 und 6 sind orthogonal zueinander angeordnete Prägestellen vorgesehen. Beim einen Beispiel sind diese parallel bzw. senkrecht zur Längsachse des Schlauches angeordnet und im Beispiel nach Fig. 6 sind diese 45° zur Längsachse gedreht.

Erstaunlicherweise hat sich herausgestellt, dass bei dickem Einschlagmaterial mit bekanntlich schlechter Wärmeleitfähigkeit sowie mit über 200 Umdrehungen der Walze pro Minute Schlauchbeutel gebildet wurden, bei denen auch an Stellen mit doppelten Folienlagen, wie bei Längsnähten oder bei Zwickeln, gasdichte Verschlüsse erhalten wurden.

**Ansprüche**

1. Siegelbackenanordnung bei Schlauchbeutel-Verpalkungsmaschinen mit wenigstens einem Paar rotierender Siegelbacken (10a, b, 11a, b oder 21a, b, 22a, b) mit Prägekanten (12, 14, 22) zur Erzeugung eines aus geraden Linien zusammengesetzten Musters von miteinander verpressten Stellen auf sich gegenüberliegenden Partien des Schlauches (S), gekennzeichnet durch ein erstes Paar Siegelbacken (10a, b, 11a, b) auf dem die Prägekanten (12, 14) in einer ersten Richtung und parallel zueinander angeordnet sind, und durch ein zweites Paar Siegelbacken (21a, b, 22a, b) auf dem die Prägekanten (22) in einer zweiten Richtung und parallel zueinander angeordnet sind.

2. Anordnung nach Anspruch 1, dadurch gekennzeichnet, dass die genannte erste Richtung und die genannte zweite Richtung orthogonal angeordnet sind.

3. Anordnung nach Anspruch 2, dadurch gekennzeichnet, dass die eine Richtung parallel zur Schlauchachse angeordnet ist.

4. Anordnung nach Anspruch 1, dadurch gekennzeichnet, dass das zweite Paar Siegelbacken (21a, b, 22a, b) eine Schneidvorrichtung (24, 25) zum Abtrennen eines beidseitig versiegelten Schlauchstückes aufweist.

5. Anordnung nach Anspruch 1, dadurch gekennzeichnet, dass die Prägekanten (12, 14, 22) von jedem Paar mit kämmenden Erhebungen (41) und Vertiefungen (40) gebildet sind.

6. Anordnung nach Anspruch 5, dadurch gekennzeichnet, dass wenigstens die Aussenflächen der Erhebungen (41) bogenförmig konvex gewölbte Flächen sind.

7. Anordnung nach Anspruch 6, dadurch gekennzeichnet, dass die Abstände zwischen den auf Vertiefung (40) ausgerichteten Erhebungen (41) ungleich den senkrecht zu den seitlichen Flanken (42, 43) gemessenen Abständen der kämmenden Partien sind.

8. Anordnung nach Anspruch 7, dadurch gekennzeichnet, dass die stromaufwärtigen Siegelbacken (10a, b, 11a, b) Nuten (13) aufweisen, durch die die Prägekanten (12, 14) in ihrer Längsrichtung unterteilt sind.

9. Anordnung nach Anspruch 8, dadurch gekennzeichnet, dass die Prägekanten (12, 14) in Ebenen senkrecht zur Drehachse der Siegelbacken angeordnet sind und dass die Nuten (13) achsparallel sind.

10. Anordnung nach Anspruch 1, dadurch gekennzeichnet, dass wenigstens die Partien der Siegelbacken (10a, b, 11a, b und 21a, b, 22a, b) erwärmt sind, bei denen die Prägekanten (12, 14, 22) angeordnet sind.

11. Anordnung nach einem der vorangehenden Ansprüche 1 bis 10, dadurch gekennzeichnet, dass die Rotationsachsen für die beiden rotierenden Siegelbackenpaare (10a, b, 11a, b und 21a, b, 22a, b) parallel zueinander angeordnet sind.

**Claims**

1. A sealing jaws arrangement in tubular bag packing machines, comprising at least one pair of rotating sealing jaws (12, 14, 22) having stamping edges (10a, b, 11a, b or 21a, b, 22a, b) for producing a pattern, composed of straight lines, of locations pressed together on mutually oppositely located parts of the tube (S), characterised by a first pair of sealing jaws (10a, b, 11a, b) on which the stamping edges (12, 14) are arranged in a first direction and parallel to one another, and by a second pair of sealing jaws (21a, b, 22a, b) on which the stamping edges (22) are arranged in a second direction and parallel to one another.

2. An arrangement as claimed in claim 1, characterised in that the said first direction and the said second direction are disposed orthogonally.

3. An arrangement as claimed in claim 2, characterised in that one direction is arranged parallel to the axis of the tube.

4. An arrangement as claimed in claim 1, characterised in that the second pair of sealing jaws (21a, b, 22a, b) has a cutting device (24, 25) for severing a portion of tube sealed at both ends.

5. An arrangement as claimed in claim 1, characterised in that the stamping edges (12, 14, 22) of each pair are formed with interengaging protuberances (41) and depressions (40).

6. An arrangement as claimed in claim 5, characterised in that at least the outer surfaces of the protuberances (41) are arcuately curved, convex surfaces.

7. An arrangement as claimed in claim 6, characterised in that the distances between the protuberances (41) aligned with the depressions (40) are unequal to the distances, measured at right angles to the lateral flanks (42, 43), between the interengaging parts.

8. An arrangement as claimed in claim 7, characterised in that the sealing jaws (10a, b, 11a, b) disposed upstream incorporate grooves (13) by which the stamping edges (12, 14) are subdivided in their longitudinal direction.

9. An arrangement as claimed in claim 8, characterised in that the stamping edges (12, 14) are disposed in planes at right angles to the axis of rotation of the sealing jaws, and that the grooves (13) are axially parallel.

10. An arrangement as claimed in claim 1, characterised in that at least those parts of the sealing jaws (10a, b, 11a, b and 21a, b, 22a, b) at which the stamping edges (12, 14, 22) are disposed, are heated.

11. An arrangement as claimed in one of the preceding claims 1 to 10, characterised in that the axes of rotation for the two rotating pairs of sealing jaws (10a, b, 11a, b and 21a, b, 22a, b) are disposed to lie parallel to one another.

**Revendications**

1. Dispositif de mâchoires de soudage pour des machines à emballer dans des sachets formés à partir d'une gaine, comportant au moins une paire de mâchoires rotatives de soudage (10a, b, 11a, b ou 21a, b, 22a, b) munies d'arêtes de gaufrage (12, 22) pour la formation d'un dessin, composé de lignes droites ; de zones pressées ensemble sur des parties mutuellement opposées de la gaine (S), caractérisé par une première paire de mâchoires de soudage (10a, b, 11a, b), sur lesquelles les arêtes de gaufrage (12, 14) sont disposées dans une première direction et parallèlement entre elles, et par une seconde paire de mâchoires de soudage (21a, b, 22a, b), sur lesquelles les arêtes de gaufrage (22) sont disposées dans une seconde direction et parallèlement entre elles.

2. Dispositif selon la revendication 1, caractérisé en ce que ladite première direction et ladite seconde direction sont orthogonales.

3. Dispositif selon la revendication 2, caractérisé en ce que l'une des directions est parallèle à l'axe de la gaine.

4. Dispositif selon la revendication 1, caractérisé en ce que la seconde paire de mâchoires de soudage (21a, b, 22a, b) présente un dispositif de coupe (24, 25) pour la séparation d'un morceau de gaine soudé des deux côtés.

5. Dispositif selon la revendication 1, caractérisé en ce que les arêtes de gaufrage (12, 14, 22) de chaque paire sont formées avec des reliefs (41) et des creux (40) qui engrènent.

6. Dispositif selon la revendication 5, caractérisé en ce qu'au moins les surfaces extérieures des reliefs (41) sont des surfaces bombées convexes en arc de cercle.

7. Dispositif selon la revendication 6, caractérisé en ce que les distances entre les reliefs (41) et les creux (40) alignés ne sont pas égales aux distances entre les parties engrenées, mesurées perpendiculairement aux flancs latéraux (42, 43).

8. Dispositif selon la revendication 7, caractérisé en ce que les mâchoires de soudage amont (10a, b, 11a, b) présentent des rainures (13), par lesquelles les arêtes de gaufrage (12, 14) sont subdivisées dans leur direction longitudinale.

9. Dispositif selon la revendication 8, caractérisé en ce que les arêtes de gaufrage (12, 14) sont situées dans des plans perpendiculaires à l'axe de rotation des mâchoires de soudage et en ce que les rainures (13) sont parallèles à l'axe de ces mâchoires.

10. Dispositif selon la revendication 1, caractérisé en ce qu'au moins des parties des mâchoires de soudage (10a, b, 11a, b et 21a, b, 22a, b) où sont disposées les arêtes de gaufrage (12, 14, 22) sont chauffées.

11. Dispositif selon l'une quelconque des revendications 1 à 10, caractérisé en ce que les axes de rotation des deux paires de mâchoires de soudage rotatives (10a, b, 11a, b et 21a, b, 22a, b) sont disposés parallèlement les uns aux autres.

Fig. 1

0 055 211

Fig. 2

Fig. 3

## Fig. 4

43
41
42
40

## Fig. 6

B

## Fig. 5